Europäisches Patentamt

European Patent Office

Office européen des brevets

(19)

(11) Veröffentlichungsnummer : **0 367 978 B1**

# (12) EUROPÄISCHE PATENTSCHRIFT

(45) Veröffentlichungstag der Patentschrift :
**19.11.92 Patentblatt 92/47**

(51) Int. Cl.$^5$ : **C22C 9/04,** C22C 9/06,
**G02C 5/00**

(21) Anmeldenummer : **89118243.8**

(22) Anmeldetag : **02.10.89**

(54) **Legierung, insbesondere zur Verwendung zur Herstellung von Brillengestellen.**

(30) Priorität : **07.10.88 DE 3834186**

(43) Veröffentlichungstag der Anmeldung :
**16.05.90 Patentblatt 90/20**

(45) Bekanntmachung des Hinweises auf die
Patenterteilung :
**19.11.92 Patentblatt 92/47**

(84) Benannte Vertragsstaaten :
**AT CH FR GB IT LI**

(56) Entgegenhaltungen :
**DE-A- 3 307 442**
**DE-B- 1 120 151**
**DE-B- 3 309 365**
**FR-A- 2 086 935**

(73) Patentinhaber : **Berkenhoff GmbH**
**Eduard-Berkenhoff-Strasse 14**
**W-6301 Heuchelheim-Kinzenbach (DE)**

(72) Erfinder : **Tauber, Klaus**
**Borngasse 6A**
**W-6301 Biebertal (DE)**

(74) Vertreter : **Missling, Arne, Dipl.-Ing.**
**Patentanwalt Bismarckstrasse 43**
**W-6300 Giessen (DE)**

EP 0 367 978 B1

# Beschreibung

Die Erfindung bezieht sich auf eine Legierung, die Verwendung einer Legierung sowie auf ein Verfahren zur Herstellung von Brillengestellen unter Verwendung dieser Legierrung.

Bei der Herstellung von Brillengestellen ist es erforderlich, die Einzelelemente des Brillengestells, beispielsweise die Fassungen der Gläser, die Scharnierelemente und ähnliches miteinander zu verbinden. Dies erfolgt üblicherweise durch Hartlöten, möglicherweise auch durch Verschweißen. Bedingt durch die bei diesen Verbindungsverfahren auftretenden Temperaturen treten in diesen Bereichen Veränderungen im Gefüge des Materials der Einzelelemente des Brillengestells auf, welche zur Folge haben, daß die ursprüngliche durch Umformung bewirkte Härte des Materials deutlich absinkt. Dadurch tritt in diesen erwärmten Bereichen eine Abnahme der Biegefestigkeit auf, so daß diese hartgelöteten oder verschweißten Bereich bei einer Krafteinwirkung auf das Brillengestell sehr leicht verbiegen können. Dies bedingt ein häufiges Nachjustieren der Form des Brillengestells selbst dann, wenn nur geringe Belastungen auf die Brille aufgebracht wurden, beispielsweise, wenn diese in zusammengelegten Zustand in der Tasche eines Bekleidungsstückes getragen wird.

Aus der DE-PS 26 26 251 ist ein Verfahren zur Herstellung eines Brillengestells bekannt, bei welchem die Einzelelemente durch Hartlöten miteinander verbunden werden. Dabei wird ein Material verwendet, welches aushärtbar ist, so daß nach dem Hartlöten eine Aushärtungsbehandlung durchgeführt werden kann. Die dabei verwendeten Legierungen erfüllen jedoch nicht für alle Anwendungsfälle die erforderlichen Anforderungen.

Der Erfindung liegt die Aufgabe zugrunde, eine Legierung der eingangs genannten Art zu schaffen, insbesondere zur Verwendung für die Herstellung von Brillengestellen, welche nach einer Verlötung oder Verschweißung einer Wärmebehandlung unterworfen werden kann und eine ausreichende Härte und Festigkeit aufweist und die Kostengünstig in der Herstellung ist.

Erfindungsgemäß wird die Aufgabe durch eine Legierung gelöst, welche aus 17 bis 25 Gew.-% Nickel, 0,5 bis 4 Gew.-% Aluminium, 18 bis 29 Gew.-% Zink, 0,1 bis 0,5 Gew.-% Mangan. Verunreinigungen bis maximal 0,5 Gew.-% und als Rest Kupfer zusammengesetzt ist.

Die erfindungsgemäße Legierung zeichnet sich durch eine Reihe erheblicher Vorteile aus. Durch den erfindungsgemäß vorgesehenen Zusatz von Aluminium ist es möglich, ein Aushärtverhalten zu erreichen, bei welchem, bei einer Temperatur unterhalb der Hartlöttemperatur, ein erheblicher Anstieg der Härte zu verzeichnen ist.

Ein weiterer Vorteil der erfindungsgemäßen Legierung ist durch die Ausbildung des ausgehärteten Gefüges gegeben, welches, bei hoher Härte, eine sehr gleichmäßige Korngröße aufweist.

Ein weiterer, wesentlicher Vorteil der erfindungsgemäßen Legierung liegt in der bereits durch Kaltumformung erzielbaren hohen Ausgangsfestigkeit, welche die Legierung vor der Wärmebehandlung aufweist, sowie in der Möglichkeit, die Festigkeit bei einer Temperaturerhöhung um einen erheblichen Prozentsatz zu steigern.

In einer weiteren, besonders vorteilhaften Ausgestaltung der Erfindung ist die folgende Zusammensetzung der Legierung in Gew.-% vorgesehen: 18 % Ni, 0,7 % Al, 0,3 Mn, 62 % Cu, weniger als 0,2 % Verunreinigungen, Rest Zn. Diese Legierung zeichnet sich, wie anhand des nachfolgend ausgeführten Beispiels beschrieben, durch eine besonders hohe Ausgangshärte und einen starken Anstieg der Härte bei steigender Temperatur, etwa einer Temperatur zwischen 300 und 450 °C aus.

In einer besonders günstigen Ausgestaltungsform der erfindungsgemäßen Legierung ist vorgesehen, daß der Aluminiumanteil 2 Gew.-% beträgt. Bei diesem Aluminiumgehalt ist es möglich, bei einem weiteren Anstieg der Temperatur während der Aushärtung beispielsweise auf einen Wert von ca. 600 °C einen erneuten Anstieg der Härte zu erzeugen, welcher dazu führt, daß die Festigkeit auch bei diesen Temperaturen, bis über einen Temperaturbereich von 700 °C, wesentlich höher ist, als bei den aus dem Stand der Technik bekannten Legierungen.

Die erfindungsgemäße Legierung ist insbesondere für die Verwendung zur Herstellung von Brillengestellen, welche üblicherweise aus einem Drahtmaterial gefertigt werden, geeignet. Die erfindungsgemäße Legierung ermöglicht es, trotz ihrer hohen Ausgangsfestigkeit, relativ hohe Querschnittsreduzierungen beim Walzen bzw. Ziehen der Drähte vorzunehmen. Weiterhin ist die erfindungsgemäße Legierung gut hartlötbar, wobei sich insbesondere bei einem Aluminiumgehalt von 2 % der starke Härteanstieg in einem Temperaturbereich zwischen 600 und 700 °C auswirkt, da üblicherweise die Hartlötung in diesem Temperaturbereich vorgenommen wird. Erfindungsgemäß ist es möglich, die Einzelelemente des Brillengestelles unter Verwendung üblicher Hartlötverfahren zu verarbeiten, beispielsweise auch durch Widerstandserhitzung.

Erfindungsgemäß wird weiterhin ein Verfahren zur Herstellung von Brillengestellen und Verwendung einer Legierung der obengenannten Art geschaffen, bei welchem vorgesehen ist, daß die Einzelelemente des Brillengestells mittels Hartlötung miteinander verbunden und anschließend einer Wärmebehandlung unterworfen werden. Durch die Wärmebehandlung ist es möglich, in sämtlichen Bereichen des Brillengestells, insbesondere in den bei der Hartlötung erwärmten Bereichen, eine hohe Festigkeit und Härte des Materials zu erzielen. Bevorzugterweise erfolgt die Wärmebehandlung in einem Temperaturbereich zwischen 200 und 550 °C.

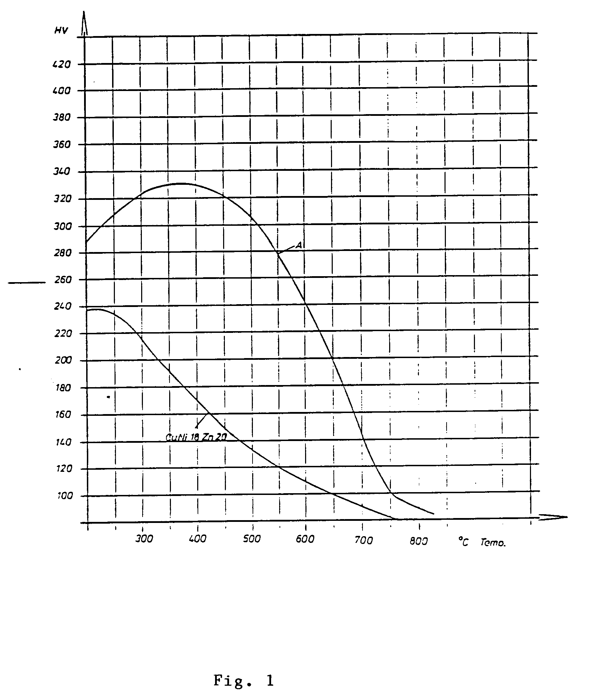

Nachfolgend wird der Härteverlauf der erfindungsgemäßen Legierung anhand eines Ausführungsbeispiels beschrieben, welches in Fig. 1 dargestellt ist.

Die Fig. 1 zeigt die Abhängigkeit der Härte (HV) in Abhängigkeit von der Temperatur des Legierungsmaterials. Die Kurve A zeigt den Härteverlauf bei einem Ausführungsbeispiel der erfindungsgemäßen Legierung, bei welchem, in Gew.-%, 18 % Ni, 0,7 % Al, 62 % Cu, 0,3 Mn, Verunreinigungen von weniger als 0,2 % und als Rest Zn vorgesehen sind. Die zweite Kurve, welche in Fig. 1 dargestellt ist, zeigt den Härteverlauf einer CuNi18Zn20-Legierung gemäß dem Stand der Technik.

Aus der Darstellung von Fig. 1 ist deutlich ersichtlich, daß die erfindungsgemäße Legierung, verglichen mit der aus dem Stand der Technik bekannten Legierung, eine sehr hohe Ausgangshärte aufweist. Bei einem Anstieg der Temperatur erfolgt bei der aus dem Stand der Technik bekannten Legierung ein geringfügiger Härteanstieg, eine weitere Erhöhung der Temperatur führt zu einem starken Härteabfall. Demgegenüber zeichnet sich die erfindungsgemäße Legierung durch einen erheblichen Anstieg der Härte bis auf Werte von ca. 350 HV aus, welche bei einer Temperatur von etwa 375 °C erreicht werden. Es folgt dann bei einer weiteren Erhöhung der Temperatur ein langsames Absinken der Härte, wobei der Ausgangswert bei etwa 530 °C erreicht wird. Wie sich aus dem Vergleich der beiden Härteverläufe ergibt, weist die erfindungsgemäße Legierung A auch bei sehr hohen Temperaturen, beispielsweise bei 700 °C, im Vergleich zu der Legierung gemäß dem Stand der Technik, noch eine erhebliche Härte auf.

## Patentansprüche

1. Legierung mit Cu, Ni, Zn, gekennzeichnet durch folgende Zusammensetzung in Gew.-%:
   Ni 17 - 25 %
   Al 0,5 - 4 %
   Zn 18 - 29 %
   Mn 0,1 - 0,5 %
   Verunreinigungen max. 0,5 %
   Rest Cu

2. Legierung nach Anspruch 1, gekennzeichnet durch folgende Zusammensetzung in Gew.-%:
   Ni 18 %
   Al 0,7 %
   Mn 0,3%
   Cu 62 %
   Verunreinigungen < 0,2 %
   Rest Zn

3. Legierung nach einem der Ansprüche 1 oder 2, dadurch gekennzeichnet, daß der Al-Anteil 2 Gew.-% beträgt.

4. Verwendung einer Legierung nach einem der Ansprüche 1 bis 3 für die Herstellung von Brillengestellen.

5. Verfahren zur Herstellung von Brillengestellen unter Verwendung einer Legierung nach einem der Ansprüche 1 bis 3, dadurch gekennzeichnet, daß Einzelelemente des Brillengestells mittels Hartlötung verbunden und anschließend einer Wärmebehandlung unterworfen werden.

6. Verfahren nach Anspruch 5, dadurch gekennzeichnet, daß die Wärmebehandlung in einem Temperaturbereich von 200 bis 550 °C erfolgt.

## Claims

1. An alloy with Cu, Ni, Zn, characterised by the following composition in % by weight:
   Ni 17 - 25 %
   Al 0.5 - 4 %
   Zn 18 - 29 %
   Mn 0.1 - 0.5 %
   impurities max. 0.5 %
   rest Cu

2. An alloy according to claim 1, characterised by the following composition in % by weight:
   Ni 18 %
   Al 0.7 %
   Mn 0.3 %
   Cu 62 %
   impurities < 0.2 %
   rest Zn

3. An alloy according to one of claims 1 or 2, characterised in that the Al-proportion is 2% by weight.

4. Use of an alloy according to one of claims 1 to 3 for the manufacture of spectacle frames.

5. Method for manufacturing spectacle frames using an alloy according to one of claims 1 to 3, characterised in that individual elements of the spectacle frame are connected by means of hard soldering and subsequently undergo a thermal treatment.

6. Method according to claim 5, characterised in that the thermal treatment is effected in a temperature range between 200 and 550°C.

**Revendications**

1. Alliage de Cu, de Ni, de Zn, caractérisé par la composition suivante, en % en poids:
   - Ni: 17 - 25 %
   - Al: 0,5 - 4 %
   - Zn: 18 à 29 %
   - Mn: 0,1 - 0,5 %
   - Impuretés, maximum: 0,5 %
   - Reste: Cu.

2. Alliage suivant la revendication 1, caractérisé par la composition suivante, en % en poids:
   - Ni: 18 %
   - Al: 0,7 %
   - Mn: 0,3 %
   - Cu: 62 %
   - Impuretés: moins de 0,2 %
   - Reste: Zn.

3. Alliage suivant la revendication 1 ou la revendication 2, caractérisé en ce que la teneur en aluminium est de 2 % en poids.

4. Utilisation d'un alliage suivant l'une quelconque des revendications 1 à 3, pour la fabrication de montures de lunettes.

5. Procédé de fabrication de montures de lunettes en utilisant un alliage suivant l'une quelconque des revendications 1 à 3, caractérisé en ce que différents organes de la monture de lunettes sont raccordées par brasage fort et sont ensuite soumis à un traitement thermique.

6. Procédé suivant la revendication 5, caractérisé en ce que le traitement thermique a lieu dans une zone de température allant de 200 à 550 °C.

Fig. 1